# EUROPEAN PATENT APPLICATION

(11) **EP 2 295 292 A1**
(43) Date of publication of application: **16.03.2011**
(21) Application number: 09794140.5
(22) Date of filing: 25.06.2009
(51) Int. Cl.: B60Q 1/24, B60Q 1/52

(54) **LIGHTING DEVICE FOE VEHICLE AND LIGHTING METHOD**

(30) Priority: 10.07.2008 JP 2008180574
(71) Applicant: Panasonic Corporation, Kadoma-shi Osaka 571-8501 (JP)
(72) Inventor: IWAI Kazuhiko, Osaka-shi, Osaka 540-6207 (JP); KUROSAWA Yoichi, Osaka-shi, Osaka 540-6207 (JP)
(74) Representative: Grünecker, Kinkeldey, Stockmair & Schwanhäusser Anwaltssozietät
(86) International application number: PCT/JP2009/002928
(87) International publication number: WO 2010/004692

(57) **Abstract**

A lighting device (100) for a vehicle, capable of more adequately draw the attention of a pedestrian to the fact that the vehicle is approaching the pedestrian. The lighting device (100) for a vehicle is provided with an object position detecting section (110) and a lighting control section (130). The object position detecting section (110) specifies an object which is present in the periphery of the vehicle and about which a warning is to be issued, and the object position detecting section detects a positional relationship between the object and the vehicle. The lighting control section (130) controls a headlight (120) so that illuminating light having a color corresponding to the positional relationship is applied to a region in which the object is present.

## Description

### Technical field

The present invention relates to a vehicle lighting apparatus and lighting method. More particularly, the present invention relates to a vehicle lighting apparatus and lighting method for making pedestrians around a subject vehicle or people riding bicycles or two-wheeled vehicles notice the approach of the subject vehicle.

### Background Art

Many technologies have been proposed heretofore to improve a driver's vision during the nighttime and so on by adjusting the amount of light radiated from lighting such as headlights or the place to illuminate according to the driving state.

For example, patent literature 1 discloses a technology for improving a driver's vision by increasing or reducing the amount of light of an adjustable lamp according to the steering angle (i.e. steering signal) of a vehicle.

Patent literature 2 discloses a technology for helping a driver find pedestrians, bicycles or two-wheeled vehicles more easily using two-colored headlights.

Patent literature 3 discloses a technology for helping a driver find pedestrians more easily, by radiating a marking light according to the positions of the pedestrians.

### Citation List

### Patent Literature

[PTL 1] Japanese Patent Application Laid-Open No. 2001-213227
[PTL 2] Japanese Patent Application Laid-Open No. HEI10-297357
[PTL 3] Japanese Patent Application Laid-Open No. 2006-176020

### Summary of Invention

### Technical Problem

Now, in order to prevent a collision of a vehicle and a pedestrian for example, it is important for the driver of the vehicle to recognize the pedestrian and operate the vehicle to avoid a collision, and, in addition, it is also important for the pedestrians to recognize the approach of the vehicle and take actions to avoid a collision. For example, when a vehicle runs at a high speed, it is difficult for the vehicle to stop abruptly or change the traveling direction abruptly, so that, oftentimes, pedestrians as well as the vehicle are required to take escaping actions.

However, a conventional vehicle lighting apparatus is designed primarily from the perspective of improving the driver's vision, and not much thought is given to the perspective of making pedestrians or people riding bicycles or two-wheeled vehicles (hereinafter collectively referred to by the word "pedestrian") notice the approach of the vehicle.

Especially, during the nighttime, when pedestrians are illuminated by headlights, the brightness of the lights makes it difficult for the pedestrians to know the distance with the approaching vehicle, and consequently the pedestrians have greater difficulty taking escaping actions.

It is therefore an object of the present invention to provide a vehicle lighting apparatus that allows pedestrians to notice the approach of a vehicle as compared with heretofore.

### Solution to Problem

One aspect of a vehicle lighting apparatus according to the present invention employs a configuration having: a headlight that changes a color of radiated light for every area to illuminate; an object position detecting section that identifies a target that is present around a subject vehicle and subject to a warning, and detects a position relationship between the target subject to the warning and the subject vehicle; and a lighting control section that controls the headlight so that a radiated light of a color corresponding to the position relationship, is radiated to an area in which the target subject to the warning is present.

One aspect of a lighting method according to the present invention includes the steps of: identifying a target that is present around a subject vehicle and subject to a warning, and detecting a position relationship between the target subject to the warning and the subject vehicle; determining a level of danger for the target subject to the warning, based on the position relationship and information about speed of the subject vehicle; and controlling a color to radiate to the target subject to the warning based on the level of danger.

### Advantageous Effects of Invention

With the present invention, a target subject to a warning (e.g. pedestrian) is able to know the position relationship with a vehicle based on the color of the light radiated from the vehicle. As a result, as compared with heretofore, it is possible to allow a pedestrian to notice the approach of a vehicle.

### Brief Description of Drawings

FIG.1 is a block diagram showing a configuration of a vehicle lighting apparatus according to embodiment 1 of the present invention;
FIG.2A shows an example of a configuration of headlights, and FIG.2B illustrates radiation of light by the headlights;
FIG.3 shows an example of general radiation of light;
FIG.4 shows an example of general radiation of light;
FIG.5 shows an example of radiation of light according to an embodiment;
FIG.6 shows a case where a pedestrian is in an area in which the pedestrian can be detected;
FIG.7 shows a case where a pedestrian is present inside an area in which the pedestrian can be detected and outside an area that can be illuminated regularly by headlights;
FIG.8 shows a case where a pedestrian is present in a position where a collision with the pedestrian can be avoided by a regular stop operation;
FIG.9 shows a case where a pedestrian is present in a position where an abrupt stop is necessary;
FIG.10 shows collectively the adjustment of color and the area to illuminate, in each case in FIG.6 through FIG.9;
FIG.11A shows how an entire illuminated area is divided, and FIG.11B shows areas illuminated by left and right headlights; and
FIG.12 is a flowchart of operations of a vehicle lighting apparatus.

### Description of Embodiments

Now, embodiments of the present invention will be described below in detail with reference to the accompanying drawings.

### (1) Overall configuration

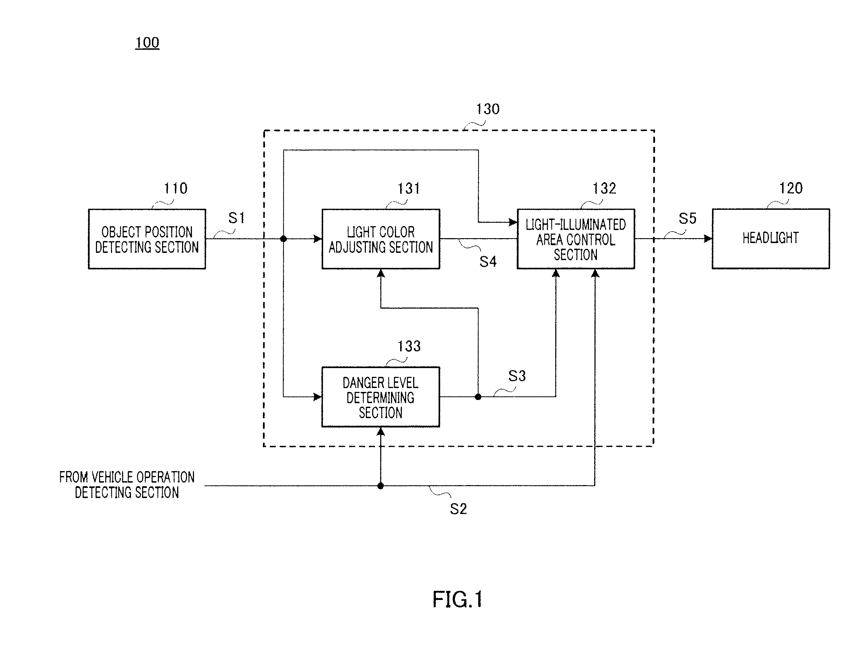

FIG.1 illustrates a principal-part configuration of a vehicle lighting apparatus according to an embodiment of the present invention. Vehicle lighting apparatus 100 is mounted in a means of transportation (that is, a vehicle) which people ride, such as a four-wheeled vehicle or two-wheeled vehicle.

Vehicle lighting apparatus 100 has object position detecting section 110, headlight 120, and lighting control section 130.

Object position detection 110 identifies targets that are present around a subject vehicle and subject to a warning, and detects the position relationships between these warning targets and the subject vehicle. To be more specific, object position detecting section 110 identifies targets that are subject to a warning, such as pedestrians outside the vehicle or people riding bicycles and two-wheeled vehicles (referred to as "pedestrians"), and outputs information S1 about the position relationships between the identified pedestrians and the subject vehicle. This position relationship information S1 includes information about the distances between the pedestrians and the subject vehicle and information about the directions of the pedestrians as seen from the subject vehicle.

The above function of object position detecting section 110 is made possible using, for example, an image sensor that acquires images outside the vehicle and an image processing circuit that identifies pedestrians using techniques such as pattern matching based on images acquired by the image sensor. A radar or laser means may be used to identify pedestrians and acquire information about position relationships. Furthermore, when a pedestrian carries a transmitter with him/her, by receiving that signal, it is possible to identify the pedestrian and acquire position relationship information without acquiring images. That is to say, object position detecting section 110 may be designed in any way as long as it can determine the position relationship of a pedestrians and a subject vehicle.

Lighting control section 130 has light color adjusting section 131, light-illuminated area control section 132 and danger level determining section 133.

Danger level determining section 133 determines the level of danger with respect to pedestrians (targets that are subject to a warning), based on position relationship information S1 acquired by object position detecting section 100 and vehicle operation state information S2 of a subject vehicle acquired by a vehicle operation detecting section. To be more specific, the shorter the distance from a subject vehicle to a pedestrian, or the faster the speed of the subject vehicle, the higher danger level determining section 133 determines the level of danger. However, various methods may be used to determine the level of danger. For example, danger level determining section 133 may determine the level of danger higher when a pedestrian nears the traveling direction of a subject vehicle. For example, in Japan, the light radiated from headlights is directed slightly to the left so as not to direct the radiation of light to the driver of an oncoming vehicle. Consequently, the driver of a subject vehicle is more likely to miss a pedestrian that is present to the left with respect to the vehicle's traveling direction than a pedestrian that is present to the right.
Taking this into account, the danger level of a pedestrian that is present to the right with respect to the traveling direction of a vehicle may be increased. Danger level determining section 133 sends out danger level information S3, which is a determined result, to light color adjusting section 131 and light-illuminated area control section 132.

Light color adjusting section 131 adjusts the color of light radiated to an area where a target subject to a warning is present, based on position relationship information S1 acquired in object position detecting section 110 and danger level information S3 acquired in danger level determining section 133. In practice, the color of light to radiate is determined in headlight 120, and light color adjusting section 131 forms color control signal S4 for controlling the color of the light to be radiated from headlight 120.

Light color adjusting section 131 of the present embodiment adjusts the color of the light to be radiated to pedestrians to be an advancing color. An advancing color refers to a color that looks close in human sight.

Whether a color is an advancing color varies depending on the color and brightness of the background. When the background is dark (during the night time, for example), warm colors such as red and yellow look closer than cool colors such as blue and green, so that warm colors are advancing colors. On the other hand, when the background is bright (during the daytime, for example), cool colors such as blue and green look closer than warm colors such as red and yellow, so that cool colors are advancing colors.

Consequently, as an advancing color, light color adjusting section 131, preferably, selects a warm color in a dark environment and selects a cool color in a bright environment. For example, it is possible to detect the brightness of the surroundings using an optical sensor and change an advancing color from a cool color to a warm color as the environment becomes darker.

The present embodiment presumes radiation of light in a stat where the outside is dark (for example, during the nighttime), and is designed to use a warm color such as red and yellow as an advancing color.

When the level of danger of a target subject to a warning increases, based on danger level information S3, light color adjusting section 131 controls the light to radiate to the warning target to a color of a higher degree of warmness. For example, by preparing two thresholds th1 and th2, between which the relationship th1<th2 holds, control may be used so that the same white light as for other areas is radiated to a target subject to a warning when the level of danger is below first threshold th1, a yellow light is radiated to the warning target when the level of danger equals or exceeds first threshold th1 and yet is below second threshold th2, and a red light is radiated to the warning target when the level of danger equals or exceeds second threshold th2.

Although a case has been described with the present embodiment where the color to radiate to a target subject to a warning is controlled according to the level of danger, it is equally possible to control the color to radiate to a warning target based on the distance between the warning target and a subject vehicle. That is to say, the light to radiate to a target subject to a warning may be controlled to a color of a higher degree of warmness when the distance to the warning target is shorter.

Light color adjusting section 131 adjusts the colors of light to radiate to targets that are subject to a warning in this way, on a per warning target basis.

Light-illuminated area control section 132 controls the advancing color, the color of which is adjusted in light color adjusting section 131, to be radiated on or near the head of a pedestrian, based on vehicle operation state information S2 including information about the speed of a subject vehicle, steering angle, tilt of the vehicle and so on, and position relationship information S1 acquired by object position detecting section 110, Light-illuminated area control section 132 sends out control signal S5 showing the color to radiate from headlight 120 and the area to illuminate with that color, to headlight section 120.

Headlight 120 may be main headlights provided in all general vehicles, or may be secondary headlights provided apart from main headlights.

Headlight 120 uses an LED, halogen light, or organic EL (electro-luminescence) light as a lighting source, providing a configuration whereby the color of radiated light can be changed per light-illuminated area.

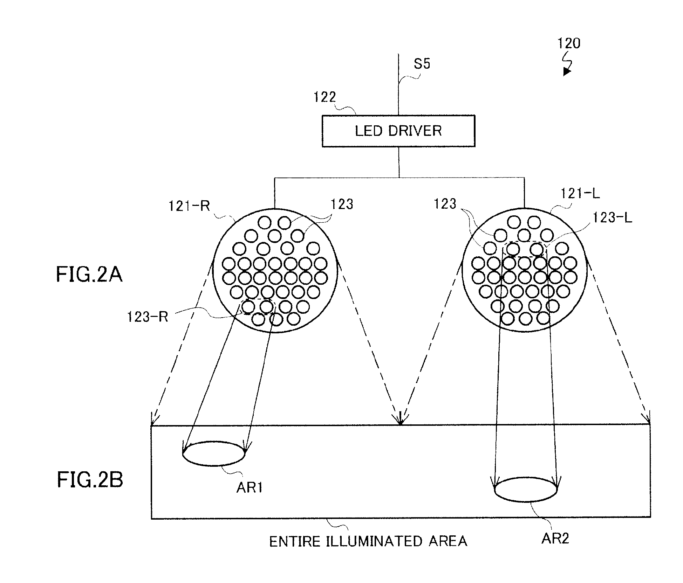

FIG.2A shows an example of a configuration of headlight 120, and FIG.2B shows a schematic view of radiation of light by headlight 120. Headlight 120 of FIG.2A has left and right LED lamps 121-R and 121-L having a plurality of lighting sources 123, and LED driver 122 that drives LED lamps 121-R and 121-L.

LED driver 122 receives as input control signal S5 from light-illuminated area control section 132 (FIG.1).
Where there are a plurality of LED lighting sources 123, LED driver 122 makes a lighting source in a position designated by control signal S5 radiate a light of a color designated by control signal S5. For example, when pedestrians, which are targets subject to a warning, are present in areas AR1 and AR2 in FIG.2B, LED lighting source 123-R and 123-L are made to illuminate these areas AR1 and AR2 with an advancing color. LED lighting sources other than LED lighting sources 123-R and 123-L may be made to radiate a white light.

The configuration of headlight 120 is by no means limited to the configuration in FIG.2A as long as light of specific colors can be radiated to specific areas.

### (2) Operations

Next, the operations of vehicle lighting apparatus 100 will be explained.

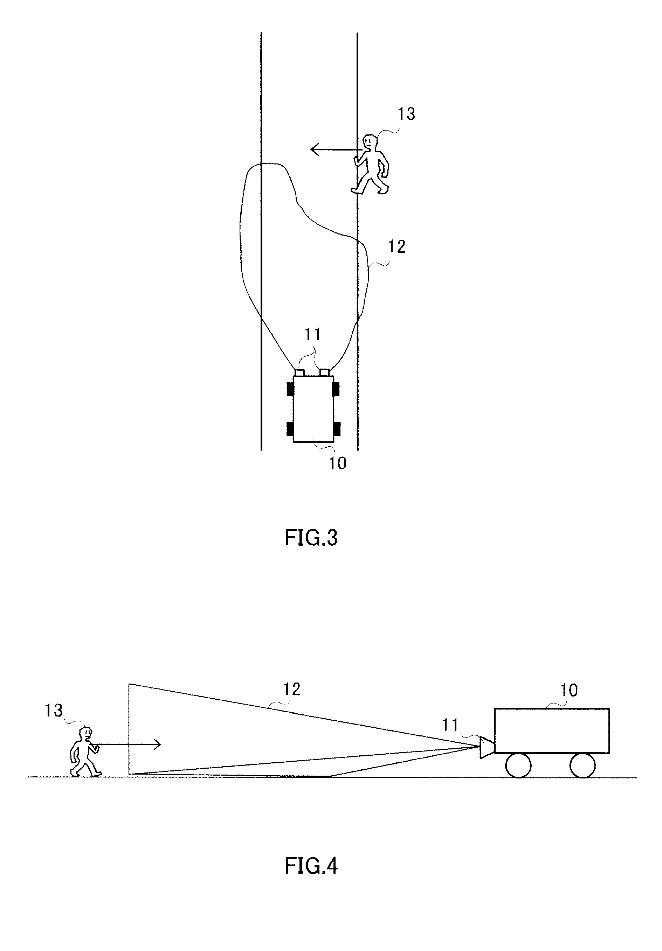

First, FIG.3 and FIG.4 show general examples of radiation of light. During the nighttime, vehicle 10 runs radiating light from headlight 11 to light-illuminated area 12 shown in the drawings. When pedestrian 13 enters the light-illuminated area, that is, light-illuminated area 12, the driver of vehicle 10 can recognize pedestrian 13.

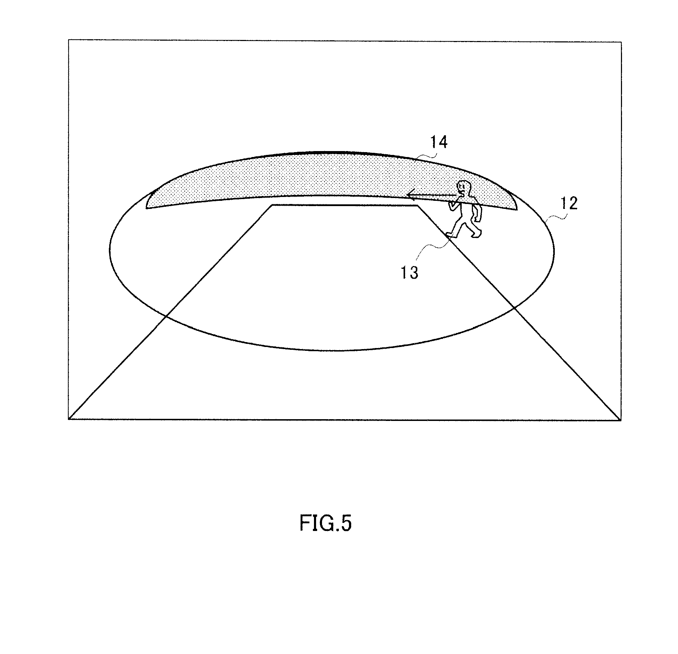

FIG.5 shows an example of radiation of light by vehicle lighting apparatus 100 according to the present embodiment. Upon detecting pedestrian 13 using object position detecting section 110 (FIG.1), vehicle lighting apparatus 100 radiates light 14, the color of which is adjusted based on the distance between pedestrian 13 and a subject vehicle (or the level of danger), to pedestrian 13.

FIG.5 shows an example in which pedestrian 13 crosses the road ahead of the vehicle from the right to the left. Light of a uniform color is radiated from regular headlights, to light-illuminated area 12. By contrast with this, from headlight 120 of the present embodiment, light 14, the color of which is adjusted based on the level of danger or distance, is radiated on or near the head of pedestrian 13. By this means, pedestrian 13 notices the approach of the vehicle.
In addition, pedestrian 13 knows the level of danger, distance and so on from the color of radiated light 14.

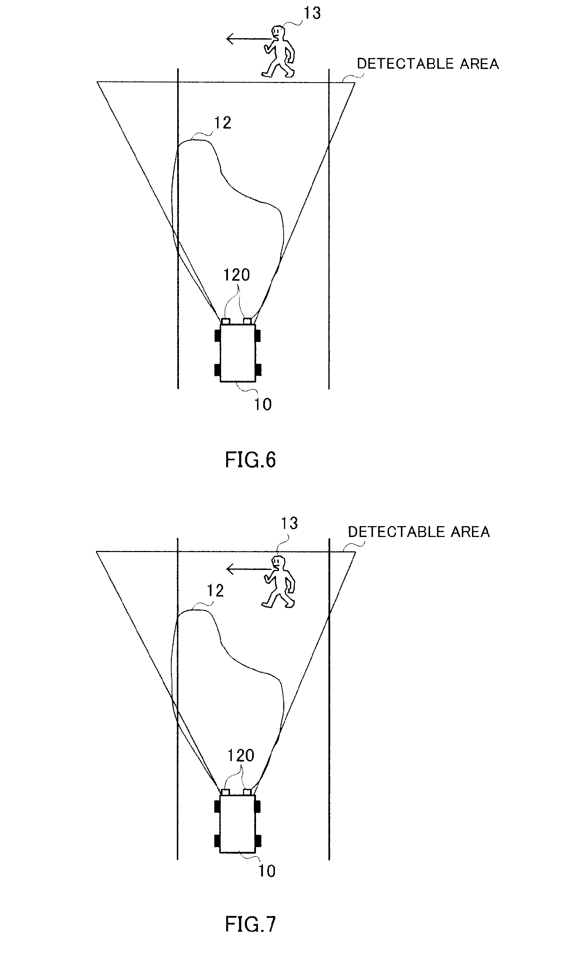

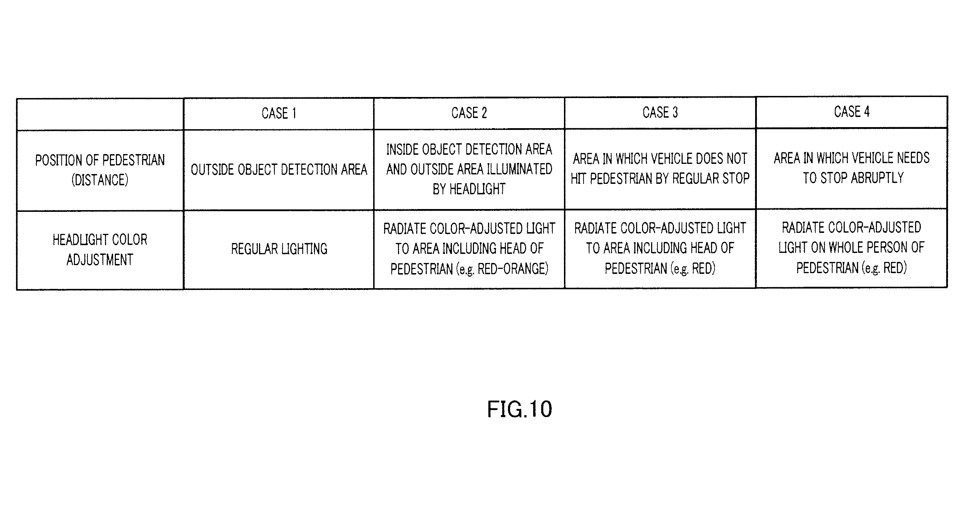

Next, an example of a light distribution operation of vehicle lighting apparatus 100 in four cases will be described. FIG.6 to FIG.9 show examples of position relationships between subject vehicle 10 and pedestrian 13 in individual cases, and FIG.10 shows collectively the adjustment of color and the area to illuminate in each case.

Case 1: As shown in FIG.6, this is a case where pedestrian 13 is present outside an area where detection by object position detection section 110 is possible. In this case, vehicle lighting apparatus 100 radiates a regular color (that is, a white light).

Case 2: As shown in FIG.7, this is a case where pedestrian 13 is present in an area where detection by object position detection section 110 is possible, and outside the area that can be illuminated regularly by headlight 120 (that is, outside the area designated to be illuminated regularly taking into account the driver's vision). In this case, vehicle lighting apparatus 100 radiates an orange light, for example, to an area including the head of pedestrian 13.

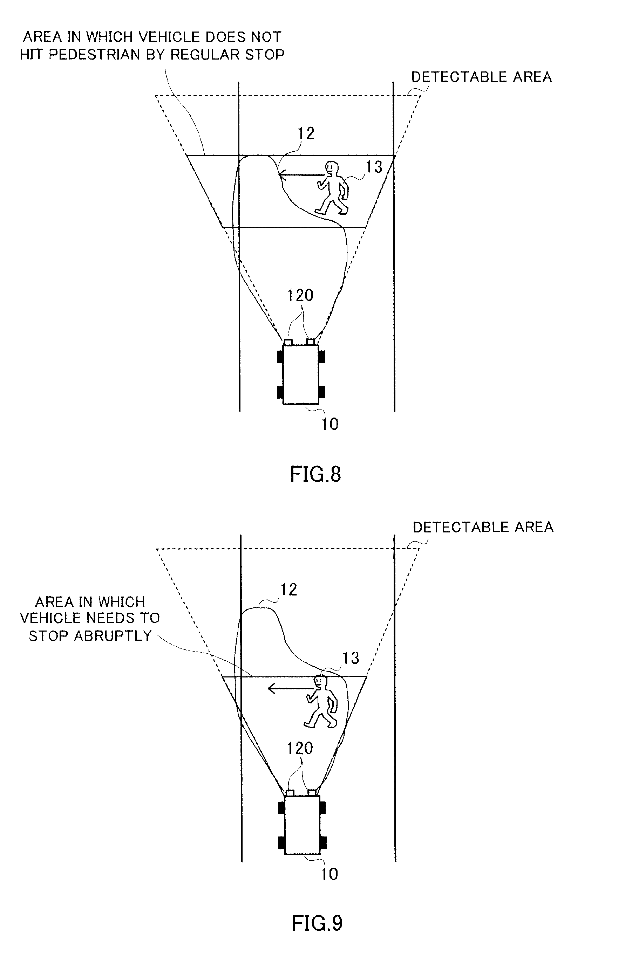

Case 3: As shown in FIG.8, this is a case where pedestrian 13 is present in a position (i.e. a position of a low level of danger) where subject vehicle 10 does not hit pedestrian 13 provided that subject vehicle 10 performs a regular stop operation. In this case, vehicle lighting apparatus 100 radiates a red light to an area including the head of pedestrian 13.

Case 4: As shown in FIG.9, this is a case where pedestrian 13 is present in a position (i.e. a position of a high level of danger) where subject vehicle 10 needs to stop abruptly. In this case, vehicle lighting apparatus 100 radiates a red light to an area including the whole person of pedestrian 13.

By controlling the color of radiated light based on the position of pedestrian 13 in this way, it is possible to make pedestrian 13 notice the approach of subject vehicle 10 without making pedestrian 13 surprised unnecessarily.

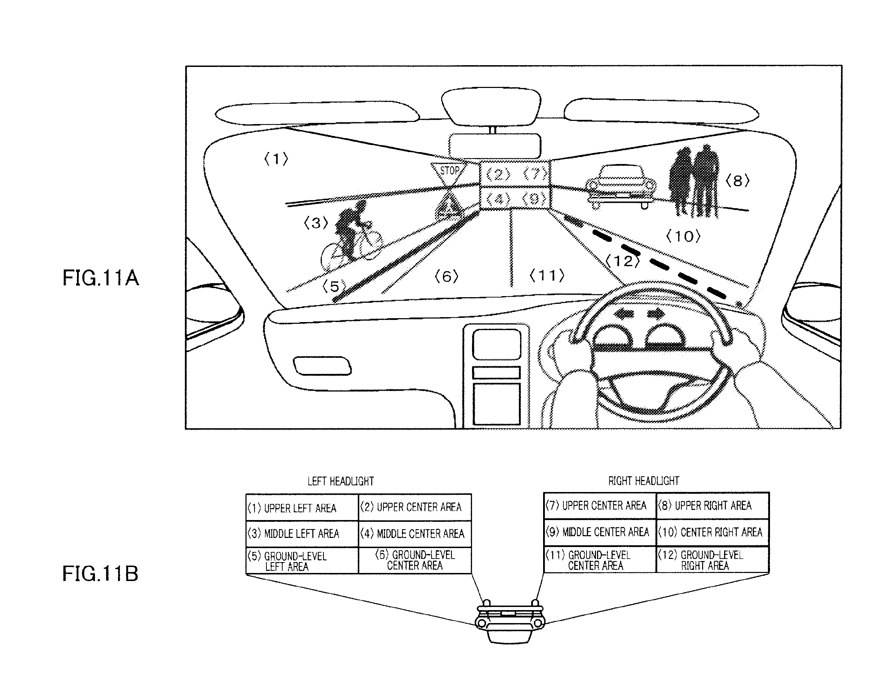

Next, using FIG. 11, examples of division of a light-illuminated area and color adjustment will be explained using FIG. 11.

FIG.11A shows division of the entire area to be illuminated by vehicle lighting apparatus 10, and FIG.11B shows areas illuminated by left and right headlights 120-L and 120-R. FIG.11 shows an example of dividing the entire area to illuminate, into twelve light-illuminated areas <1> to <12>.

As shown in FIG.11A, there are objects such a bicycle, pedestrians, a road sign, and an oncoming vehicle ahead of the vehicle. Furthermore, as shown in FIG.11B, the area illuminated by headlight 120 is divided into: <1> upper left area; <2> upper center area; <3> middle left area; <4> middle center area; <5> ground-level left area; <6> ground-level center area; <7> upper center area; <8> upper right area; <9> middle center area; <10> center right area; <11> ground-level center area; and <12> ground-level right area, so that headlight 120 is able to radiate lights in colors adjusted individually for each area. Codes in FIG.11A and FIG.11B are mutually associated.

In the example of FIG.11A, pedestrians are present in area <3> and area <8>, so that an advancing color needs to be radiated over <3> middle left area and <8> upper right area.

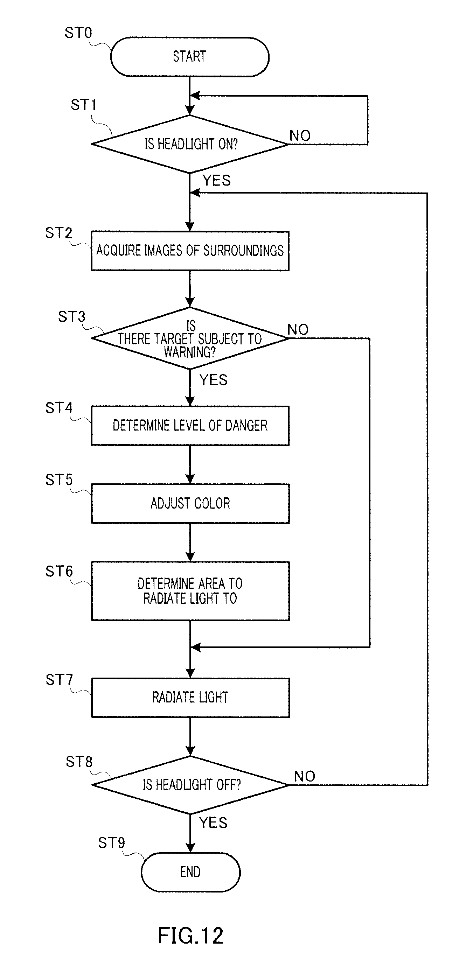

FIG. 12 is a flowchart for explaining the operations of vehicle lighting apparatus 100 according to the present embodiment.

Vehicle lighting apparatus 100, upon starting operating in step ST 0, waits until headlight 120 is switched on in step ST 1. When headlight 120 is switched on in step ST 1, the step moves to step ST 2 and object position detecting section 110 acquires images of the surroundings of a subject vehicle.

In following step ST 3, object position detecting section 110 determines, for every object in the images, whether or not an object is a target that is subject to a warning. To be more specific, object position detecting section 110 determines the kinds of objects based on the images of the objects acquired, using techniques such as pattern matching. If the kind of an object is determined to be an object with a person such as a pedestrian, bicycle or two-wheeled vehicle ("pedestrian"), for example, that object is determined to be a target that is subject to a warning. If an object is determined to be a target subject to a warning in step ST 3, the step moves to step ST 4, or, if an object is determined not to be a target subject to a warning, the step moves to step ST 7.

In step ST 4, danger level determining section 133 determines the danger level of a target that is subject to a warning.

In step ST 5, based on the danger level of the target subject to a warning, light color adjusting section 131 adjusts the color of the light to radiate to that warning target.

In step ST 6, light-illuminated area control section 132 determines the area to illuminate by the color-adjusted light.

In step ST 7, headlight 120 radiates light.
Then a light, the color of which is adjusted based on the level of danger, is radiated on the warning target. On the other hand, a white light is radiated to areas where there are no targets subject to a warning.

Next, in step ST 8, vehicle lighting apparatus 100 determines whether or not headlight 120 is switched off, and, if, headlight 120 is not switched off, the step returns to step ST 12, or, if headlight 120 is switched off, the step moves to step ST 9, and the processing is terminated.

### (3) Effect

As described above, according to the present embodiment, object position detecting section 110 and lighting control section 130 are provided to specify targets that are present around a subject vehicle and subject to a warning, and to detect the positional relationships of the warning targets and the subject vehicle, so that pedestrians for example are able to know the distance to an approaching vehicle more easily and notice the approach of the vehicle.

Although a case has been described with the present embodiment where the color of light to radiate to a target that is subject to a warning is adjusted to allow pedestrians to notice the approach of a vehicle, besides the above-described color adjustment, it is also possible to control the luminance and illuminance of headlight 120. For example, when the distance to a pedestrian nears, the color of the light to radiate to a pedestrian may be controlled to a color of a higher degree of warmness (that is, the color may be changed from yellow to red gradually, for example). However, in addition to this, by controlling the luminance and illuminance, it becomes possible to allow the pedestrian to know better how much the vehicle has approached the pedestrian. For example, the luminance or illuminance of the red light radiated to the pedestrian may be increased as the distance between the pedestrian and the subject vehicle nears.

The disclosure of Japanese Patent Application No. 2008-180574, filed on July 10, 2008, including the specification, drawings and abstract, is incorporated herein by reference in its entirety.

### Industrial Applicability

The present invention is widely applicable to vehicle light apparatus provided in, for example, four-wheeled vehicles and two-wheeled vehicles.

## Claims

1. A vehicle lighting apparatus comprising:
a headlight that changes a color of radiated light for every area to illuminate;
an object position detecting section that identifies a target that is present around a subject vehicle and subject to a warning, and detects a position relationship between the target subject to the warning and the subject vehicle; and
a lighting control section that controls the headlight so that a radiated light of a color corresponding to the position relationship, is radiated to an area in which the target subject to the warning is present.

2. The vehicle lighting apparatus according to claim 1, wherein the lighting control section further comprises:
a danger level determining section that determines a level of danger for the target subject to the warning, based on the position relationship and information about speed of the subject vehicle; and
a color adjusting section that controls the color of the radiated light radiated to the area in which the target subject to the warning is present, based on the level of danger.

3. The vehicle lighting apparatus according to claim 2, wherein the lighting control section further comprises a light illuminated area control section that controls an area to which the radiated light having been subjected to the color control, based on the position relationship and a driving state of the subject vehicle.

4. The vehicle lighting apparatus according to claim 1, wherein the lighting control section controls the headlight so that an advancing color is radiated to the area in which the target subject to the warning is present.

5. The vehicle lighting apparatus according to claim 1, wherein:
the target subject to the warning is a pedestrian or a person riding a bicycle or two-wheeled vehicle; and
the lighting control section controls the headlight so that an advancing color is radiated to a head part of the pedestrian or the person riding the bicycle or two-wheeled vehicle and a white color is radiated to other areas.

6. The vehicle lighting apparatus according to claim 1, wherein, when a distance between the target subject to the warning and the subject vehicle is nearer according to the position relationship, the color of the radiated light radiated to the area in which the target subject to the warning is present, is controlled to a color of a higher degree of warmness.

7. The vehicle lighting apparatus according to claim 1, wherein the lighting control section controls a color temperature, luminance or illuminance of the radiated light radiated to the area in which the target subject to the warning is present, based on the position relationship acquired by the object position determining section.

8. A lighting method for a headlight provided in a vehicle, comprising the steps of:
identifying a target that is present around a subject vehicle and subject to a warning, and detecting a position relationship between the target subject to the warning and the subject vehicle;
determining a level of danger for the target subject to the warning, based on the position relationship and information about speed of the subject vehicle; and
controlling a color to radiate to the target subject to the warning based on the level of danger.

9. The lighting method according to claim 8, wherein, in the step of color control, the color to radiate to the target subject to the warning is controlled to a color of a higher degree of warmness when the level of danger is higher.
